Europäisches Patentamt

European Patent Office

Office européen des brevets

(19)

(11) Publication number: **0 011 324**
**B1**

(12) **EUROPEAN PATENT SPECIFICATION**

(45) Date of publication of patent specification: **02.03.83**

(51) Int. Cl.³: **A 23 L 1/22, A 23 F 5/46**

(21) Application number: **79200607.4**

(22) Date of filing: **22.10.79**

(54) Fluidized bed process for making beverage, food or the like.

(30) Priority: **03.11.78 US 957272**

(43) Date of publication of application:
**28.05.80 Bulletin 80/11**

(45) Publication of the grant of the patent:
**02.03.83 Bulletin 83/9**

(84) Designated Contracting States:
**BE DE FR GB IT NL**

(56) References cited:
**DE - B - 1 029 802**
**FR - A - 1 561 964**
**FR - A - 2 164 618**
**US - A - 3 391 003**
**US - A - 3 615 669**
**US - A - 3 989 852**

(73) Proprietor: **THE PROCTER & GAMBLE COMPANY**
**301 East Sixth Street**
**Cincinnati Ohio 45202 (US)**

(72) Inventor: **Pflaumer, Philip Floyd**
**2770 Timberman Road**
**Hamilton, Ohio 45013 (US)**
Inventor: **Weisman, Paul Thomas**
**3471 Village Dr. Apt. E**
**Franklin, 45005 (US)**

(74) Representative: **Gibson, Tony Nicholas et al,**
**Procter & Gamble European Technical Center**
**Temselaan 100**
**B-1820 Strombeek-Bever (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Fluidized bed process for making beverage, food or the like

This invention encompasses a process for capturing and retaining aromas and/or flavors of the type found in foods and beverages, and the compositions secured therefrom. The process herein is especially useful in the manufacture of beverages, particularly instant coffee.

Commercial instant coffees are made by aqueous extraction of roast and ground coffee, followed by one of two basis drying processes. The older and less expensive process involves spray-drying and water extract. Unfortunately, volatile aroma and flavor components can be lost during spray-drying, and spray-dried instant coffees are generally characterized as less flavorful and aromatic than roast and ground coffees. Freeze-drying of coffee extracts is a more expensive process, but does generally yield a higher quality product with better aroma retention than spray-dried coffees.

The present invention involves spraying small drops of aroma/flavor concentrates into a fluidized bed of dry coffee solids. Each atomized droplet is coated with dry coffee solids to "lock in" the desirable aromas and flavors. This process is termed "absorption drying" herein.

The absorption drying process of this invention provides a low-cost alternative to freeze-drying. By operating in a concentrated system composed of an aroma-rich core surrounded by a dry shell, the retention of volatiles during absorption drying is the same or better than with freeze-drying. It is to be understood that the adsorption drying process of this invention is not limited to the manufacture of instant coffee, but can be used in the manufacture of a wide variety of instant foods, beverages and the like. In particular, instant grain (malted barley) beverages having excellent coffee-like aromas and flavors can be made by the present process, as can instant teas, instant fruit-flavored beverages, instant chocolate beverages, instant soups, and the like.

Background Art

US—A—3,615,669 discloses a fluidized bed agglomeration process for manufacturing coffee. There is no disclosure therein, however, of a rapid drying step immediately after aggregate formation as practised in the present invention, nor of agglomeration using solids in the form of a mixture of particles and flakes.

Thijssen, H. A. C., "The Effect of Process Variables on Aroma Retention in Drying Coffee Extract", ASIC, June 2—6, 1969; and Thijssen, H. A. C., "Effect of Process Conditions in Drying Coffee Extract and Other Liquid Foods on Aroma Retention", ASIC, June 1973, relate to studies of the mass transport properties of model aroma compounds during a coffee drying operation (see below).

The abstraction and capture of volatile aroma and flavor materials from coffee and other edibles such as oranges are disclosed in US—A—3,595,669; 3,717,472 and 3,997,685, to R. G. K. Strobel. The Strobel procedures can be used to prepare the aroma and flavor concentrates used in the present process.

US—A—3,704,132 discloses a method for purifying coffee oil for use as a coffee aroma carrier.

Coffee extracts of the type used herein can be prepared by various art-disclosed means, including that described in US—A—3,700,466 and in US—A—3,700,463.

US—A—3,625,704 discloses a means for preparing instant coffee in the form of flakes.

US—A—3,769,032 discloses a means for preparing aroma-enriched coffee products.

Several U.S. patents disclose means for preparing spray-dried coffee particulates and other instant foods and beverages. See US—A—2,771,343; 2,750,998; and 2,469,553. See also Sivetz and Foote, "Coffee Processing Technology", Avi Publishing Co., 1963.

The foregoing U.S. patents and references disclose means for preparing various components used in the practice of the present invention.

Disclosure of the Invention

The present invention provides a process for manufacturing a water-dispersible composition for use as an instant food, instant beverage, or the like, comprising atomizing a liquid aroma concentrate, a flavor concentrate, or a mixed aroma/flavor concentrate commensurate with said food, beverage or the like, and having a viscosity of from 5 centipoise (5 mPa.s) to 200,000 centipoise (0.2 kPa.s), as droplets into a fluidized bed, the solids in said fluidized bed comprising a dried extract of said food, beverage, or the like whereupon said solids form aggregates on said droplets, said aggregates having a moisture content less than 15%, characterized in that the solids comprise a mixture of particles and flakes at a weight ratio of flakes:particles in the range from 30:70 to 70:30; the flakes having diameters in the range of from 0.5 mm to 12.7 mm, the ratio of droplets:solids being at least 1:5 by weight, and wherein the process additionally comprises drying said aggregates substantially immediately after their formation to a moisture level of less than 10%, preferably to a level in the range from about 2.5% to about 4.5%, especially from about 3.0% to about 3.5%.

Drying the aggregates quickly, i.e., substantially immediately after their formation and recovery, is critical for securing products having optimal aromas and flavors. Moreover, overall product aroma and flavor are optimized by performing the process under conditions such that a dried shell forms quickly around the aroma/flavor-rich droplet. Aroma and flavor components are impermeable to the dried shell and thus are retained in the product aggregate throughout the process. These observations are in accord with the reports by Thijssen (above), and reflect the fact that the diffusivity of aroma and flavor in a coffee extract system is dependent on the water concentration. Thus, at lower water concentration (ca. <10%, preferably <3.5%), such as are present in the shell of the dried aggregate, the diffusivity of aroma-type compounds is three orders of magnitude less than the diffusivity of water. Indeed, the relative diffusivity of the aroma volatiles is so small that the shell can be considered as being selectively permeable only to water. Accordingly, by drying the aggregate products of the present processes as soon as possible after their formation, water is removed before the desirable volatiles can escape.

The process of this invention is especially useful in the manufacture of instant coffee compositions in the form of aggregates, said aggregates comprising:

(a) a core of coffee aroma or flavor materials, or, preferably, mixtures thereof, said core being substantially surrounded by and encapsulated by:

(b) a mixture of particles and flakes, of dried coffee extract, merged on the outer surface of said core.

Highly preferred coffee, etc., compositions prepared herein are those wherein said aggregates contain no more than about 4.5% by weight of moisture and are free-flowing.

The instant coffee compositions made by the process herein comprise the coffee aroma/flavor core surrounded and encapsulated by a mixture of dried coffee flakes and coffee particles merged to form an aroma/flavor encapsulating shell. The weight ratio of particles:flakes is in the range of from 30:70 to 70:30, generally about 60:40. Such coffee compositions most preferably contain no more than about 4.5% by weight of water, and are free-flowing.

All percentages herein are by weight, unless otherwise specified.

Best Mode

The following describes a preferred and convenient mode of practicing the present invention to manufacture an instant coffee product characterized by improved flavor and aroma qualities. It will be appreciated that the same method can be used to manufacture other instant beverages such as instant tea, instant fruit drinks, and the like.

At the heart of the process is a fluidized bed of spray-dried coffee. Alternatively, this fluidized bed can be a mixture of different types of dried solids, for example grain and coffee, to prepare a grain-coffee beverage. The fluidized bed has the solids in different forms; the solids are preferably a spray-dried instant coffee powder admixed with instant coffee flakes. The presence of the flakes in the final aggregate product greatly improves product appearance and desirably enhances the structural integrity of the aggregates.

Fluidization is a process wherein fine solids are made to behave in a fluid-like manner. Fluidization is accomplished by allowing a stream of gas (e.g., air, nitrogen, etc.) to rise through a bed of coffee particles. Fluidization will take place when the force of the fluidizing gas exceeds the force of the weight and friction factors within the bed of solid particles. A dense phase fluidized bed behaves much like a boiling liquid, so a stream of atomized droplets of concentrated aroma/flavor can be introduced into the fluidized bed of coffee, whereupon the droplets are quickly coated.

A convenient fluidized bed apparatus used to prepare pilot batches of adsorption dried instant coffee in the manner of this invention comprises a 15 cm I.D. vertical column ca. 1.435 m in height with a Plexiglass viewing section at the lower bed portion and a stainless steel disengaging section. The gas ($N_2$ or air) distributor for fluidizing the solids is a porous sintered metal disc comprising the base of the column. The gas supply is a 1.27 cm compressed air or $N_2$ line supplying 80—100 psi (552—689 kPa).

A spray nozzle is positioned centrally in the sintered disc and is directed upwardly to atomize the aroma/flavor liquid directly into the fluidized bed comprising the coffee particles and flakes. The exit port of the nozzle protrudes ca. 10.2 cm into the cylinder; the entrance port is connected to a reservoir of the liquid aroma/flavor concentrate. For an apparatus of the foregoing size the nozzle is 508 $\mu$m/1270 $\mu$m (I.D./O.D.), with the air cap having a 1778 $\mu$m I.D. (Spraying System pneumatic nozzle). A nozzle of these dimensions provides a full cone 18° spray.

In operation, the cylinder is charged to ca. 15% of its height with coffee particles or flakes (ca. 0.65 kg). Air or $N_2$ is introduced into the column via the sintered metal base to fluidize the bed of coffee. The concentrated aroma/flavor solution is then atomized through the spray nozzle into the dense phase fluidized bed of coffee, whereupon the desired instant coffee aggregates are formed. The aggregates (ca. 10—15% by weight water) are removed from the cylinder and dried, preferably within 1—2 minutes after removal, and within about 5 minutes after their formation, to a moisture level of ca. 2.5%—4.5%, most preferably ca. 3.0%—3.5%. thereby locking in the aroma/flavor in the form of a core for the individual aggregates.

It will be appreciated that the concentrated aroma/flavor solution used in the foregoing manner should be somewhat viscous and tacky so that the solid coffee particles and flakes adhere to the atomized droplets. The solute content should be as high as possible, consistent with achieving the desired viscosity. An aqueous aroma/flavor solution with a viscosity below about 5 centipoise (5 cps or 5 mPa.s) is not useful in the practice of this invention since the water with dissolved aroma/flavor solutes simply wicks into the solids and does not form the desired structure comprising the core encapsulated by the shell formed as the particles and flakes merge. The viscosity range is dependent on the dissolved solutes in the aroma/flavor solution, and these solutes generally comprise *ca.* from about 30% to about 70% of the solution, which corresponds to viscosities in the range of from about 19 cps (19 mPa.s) to about 200,000 cps (0.2 kPa.s). Preferably, the solute content is *ca.* 50%. Preferably the viscosity is in the range of 500—700 cps (0.5—0.7 Pa).

The process of this invention is carried out using mixture of instant coffee particles and instant coffee flakes, for several reasons. First, a better quality of fluidization in the fluidized bed is achieved, presumably due to the broader range of sizes of the solids being fluidized. The presence of shiny coffee flakes in the final agglomerated product also contributes substantially to product appearance. For example, coffee products made in accordance with this invention containing coffee flakes have a rich, brown appearance. Other products made by this process, e.g., orange juice beverage aggregates containing orange flakes, have a desirable sheen. Moreover, the flakes contribute importantly to the stability of the aggregates. During the fluidizing process, the aggregates being formed are continually subjected to abrasion until such time as they are removed from the fluidized bed and dried. It is important that the aggregates not disintegrate, since the aroma/flavor volatiles in their cores would be lost. The presence of flakes in the aggregates helps maintain their integrity during formation. Moreover, the presence of the flakes in the aggregates helps maintain aggregate integrity during the subsequent drying step, which preferably comprises drying the aggregates while they are being vibrated.

The coffee particles used in the practice of this invention comprise spray-dried instant coffees. As manufactured, spray-dried coffee has an average particle size in the 5—300 $\mu$m range and the particles are hollow. For use herein, the spray-dried coffee particles are preferably milled (and thereby densified) to a particle size in the 5—50 $\mu$m range.

The instant coffee flakes used herein are somewhat larger than the coffee particles. The optimal flakes pass through a 16 mesh Standard Sieve (1.2 mm). Flake manufacture is described in US—A—3,625,704.

The aggregation step of this process is carried out by atomizing the tacky liquid aroma/flavor concentrate into the dense phase of the fluidized bed of solid instant coffee. Droplet size of the concentrate is in the 50—500 $\mu$m range, that is, slightly larger than the solid bed material. In general, 5 parts by weight of bed solids to 1 part of spray provide excellent agglomerates. The rate of introduction of the concentrate into the dense phase of the fluidized bed affects the rate of agglomeration. In the extreme, if the concentrate is atomized too rapidly, the individual droplets of concentrate coalesce; this is to be avoided. A convenient range of atomization for preparing instant foods and beverages in a pilot scale apparatus as disclosed above introduces about 24 grams of the liquid aroma/flavor concentrate into the bed per minute. Thus, in a typical pilot-scale bed comprising 650 g of 1:1 coffee particles and flakes, 130 g of aroma/flavor concentrate is introduced over a period of about 5 minutes and 23 seconds.

It is highly preferred that the aggregates as prepared in the bed contain no more than about 10% to about 12% total moisture. If the moisture content is allowed to become greater than about 15% (e.g., by using slightly damp coffee solids as the bed material, by using excess water in the aroma/flavor concentrate, or by operating at too high a humidity), the aggregates are too tacky and begin to set up in a solid mass before they can be recovered from the fluidizing apparatus. As disclosed below, after aggregation is complete, the moisture content is further reduced by a drying step.

The aggregation step of the present process is conveniently carried out at temperatures of about 20°C—30°C. If the fluidized bed is allowed to become too warm, desirable aroma and flavor volatiles can be lost. If the fluidized bed is run at extremely cold temperatures to minimize the loss of volatiles, longer drying times in the subsequent step are required.

After the aggregates are formed, they are dried. Proper control of the drying step is very important. If after they are formed the aggregates are allowed to stand for a substantial period of time (*ca.* 3—5 minutes, or, perhaps, somewhat longer, depending on the surrounding conditions of temperature and humidity) the desirable aromatic and flavor volatiles in the core of the aggregates will migrate to the surface and be lost. Accordingly, it is important that the aggregates be dried substantially immediately after they are formed and recovered from the fluidized bed. Again, this can depend somewhat on the moisture content of the core, but for aggregates which comprise about 10%—12% moisture, drying should begin within about 1—2 minutes after the aggregates are recovered from the fluidizing apparatus. Preferably, a continuous fluidized bed apparatus is equipped with s standard collecting device so that, as the aggregates are formed, they are continuously removed and delivered directly to the dryer.

Drying can be carried out in any manner which reduces the moisture content of the aggregates to the desired range quickly. Preferably, the drying time for an individual aggregate is about one minute. Forced air, warm forced air (preferred: 90—100°C air), radiant heat, vacuum drying, and the like, can be used, as long as dryness is quickly achieved so that the shell of merged particles around the core "lock in" the volatile aroma/flavor components. Whatever means of drying is used, it is important to aroma/flavor retention not to allow the temperature of the aggregates, themselves, to exceed about 70—75°C. Preferably, the aggregates are vibrated continuously during the hot air drying step. In an optimal (*ca.* one minute; 90—100°C) forced air vibratory drying step, the aggregates reach temperatures of about 60°C. Commercial apparatus such as the Jeffry Vibratory Dryer are convenient for use in the drying step of the present process.

Industrial Applicability

The practice of the present invention is further illustrated by the following examples, which are not intended to be limiting of the type of ingestible compositions which can be manufactured by the present process.

Example I

In accordance with the procedure disclosed in US—A—3,997,685, a coffee column having a width of *ca.* 12.7 cm and a length of 15 cm is placed in communication with two in-line condensing traps. The first trap is held at —76°C by dry ice. The second trap is held at —195.8°C by liquid nitrogen. A vacuum pump is connected to the system to allow the use of vacuum pressures during operation.

900 grams of roasted coffee beans are frozen in liquid nitrogen and ground to a fine grind size, i.e., less than 20 mesh U.S. Standard Sieve. In order to purge the system of oxygen, 10 grams of solid carbon dioxide are placed on the beans and allowed to sublime and be carried through the system to displace oxygen. The roast and ground coffee is placed in the column. Water at 90°—100°C is introduced to produce wet steam which is pulsed downward through the column zone.

The cold wet steam is passed in a downward manner through the column in a pulsing fashion and introduced at approximately two-minute intervals in approximately equal amounts. A black band of materials is evident in the uppermost portions of the column. During the run this band continually moves downward through the column prior to breakthrough. Prior to breakthrough, a colorless frost is collected in the first trap and retained.

The second trap, which is held at liquid nitrogen temperatures, provides a solidified aroma frost which comprises coffee aroma and carbon dioxide solidified into an aroma-$CO_2$ matrix.

The melted frost from the two traps prepared in the foregoing manner is admixed with spray-dried coffee solids to prepare a *ca.* 50% aqueous concentrate of total dissolved coffee solids, viscosity *ca.* 604 centipoise (0.604 Pa.s).

The amount of aroma/flavor fluid used can be adjusted according to the needs of the formulation. An aroma/flavor concentrate having a viscosity in the 600—700 cps (0.6—0.7 Pa.s) range is preferred.

The aroma/flavor concentrate prepared in the foregoing manner is atomized into a fluidized bed comprising *ca.* 60% (wt.) of spray-dried instant coffee powder and *ca.* 40% (wt.) instant coffee flakes, using the apparatus and technique described hereinabove. Approximately 100 g of aroma/flavor concentrate per 500 g of the mixture of powder and flakes is used.

As the aroma/flavor concentrate is atomized into the fluidized bed, the powder and flakes aggregate on the droplets to form aggregates. Said aggregates comprise *ca.* 10% water. The aggregates are immediately removed from the fluidized bed column and heat-dried (Jeffry continuous forced air dryer; *ca.* 95—100°C air; average moisture content of *ca.* 3.5% by weight).

The instant coffee product prepared in the foregoing manner has a density of *ca.* 0.3 g/ml. One teaspoonful (1.5 g) of the product added to 150 mls. of hot water rapidly dissolves to yield a flavorful, aromatic coffee beverage whose organoleptic properties are fully equivalent to freeze-dried instant coffee.

Example II

Coffee beans (25% Robusta; 75% Arabica) are decaffeinated with methylene chloride in standard fashion, roasted, ground, extracted and the extract spray-dried and crushed to *ca.* 25 μm. A portion of the decaffeinated instant coffee is converted to flakes by roll milling in the manner disclosed in US—A—3,625,704.

A 1:1 (wt.) mixture of the decaffeinated coffee particles and flakes is placed in a fluidizing apparatus, as disclosed above. An aroma/flavor concentrate (604 cps 0.604 Pa.s) is prepared using decaffeinated coffee solids in the manner of Example I. The concentrate is atomized into the dense region of the fluidized bed and aggregates form. The aggregates are removed from the apparatus and substantially immediately dried (hot air) to a moisture content of 3.5%. The product is a flavorful, aromatic decaffeinated coffee.

Claims

1. A process for manufacturing a water-dispersible composition for use as an instant food, instant beverage, or the like, comprising atomizing a liquid aroma concentrate, a flavor concentrate, or a mixed aroma/flavor concentrate commensurate with said food, beverage or the like, and having a viscosity of from 5 centipoise (5 mPa.s) to 200,000 centipoise (0.2 kPa.s), droplets into a fluidized bed, the solids in said fluidized bed comprising a dried extract of said food, beverage, or the like whereupon said solids form aggregates on said droplets, said aggregates having a moisture content less than 15%, characterized in that the solids comprise a mixture of particles and flakes at a weight ratio of flakes:particles in the range from 30:70 to 70:30; the flakes having diameters in the range of from 0.5 mm to 12.7 mm, the ratio of droplets:solids being at least 1:5 by weight, and wherein the process additionally comprises drying said aggregates substantially immediately after their formation to a moisture level of less than 10%.

2. A process according to Claim 1 characterized in that the particles or flakes comprise a dried, water-soluble grain extract.

3. A process according to Claim 2 characterized in that the grain extract is malted barley extract.

4. A process according to any preceding Claim characterized in that the drying step comprises hot air drying.

5. A process according to Claim 4 characterized in that the hot air drying step further comprises forced air vibratory drying.

6. A process according to Claim 5 characterized in that the forced air vibratory drying is conducted for about one minute at a hot air temperature of from 90° to 100°C.

7. A process according to any preceding Claim characterized in that the aggregates are dried to a moisture level of from 2.5% to 4.5%.

## Revendications

1. Procédé pour la fabrication d'une composition dispersible dans l'eau en vue de son utilisation comme aliment instantané, boisson instantanée ou analogues, comprenant l'atomisation d'un concentré d'arôme liquide, d'un concentré de saveur ou d'un concentré mixte d'arôme/saveur proportionné audit aliment, à ladite boisson au analogues, et possédant une viscosité de 5 centipoises (5 mPa.s) à 200.000 centipoises (0,2 kPa.s) sous forme de gouttelettes dans un lit fluidisé, les matières solides dans le lit fluidisé comprenant un extrait séché de l'aliment, de la boisson ou des analogues, moyennant quoi lesdites matières solides forment des agrégats sur lesdites gouttelettes, les agrégats ayant une teneur en humidité inférieure à 15%, caractérisé en ce que les matières solides comprennent un mélange de particules et de paillettes dans un rapport pondéral paillettes:particules de l'ordre de 30:70 à 70:30; les paillettes ayant des diamètres compris entre 0,5 mm et 12,7 mm, le rapport gouttelettes:matières solides étant d'au moins 1:5 en poids, et le procédé comprend en outre le séchage des agrégats presque immédiatement après leur formation jusqu'à un taux d'humidité de moins de 10%.

2. Procédé selon la revendication 1, caractérisé en ce que les particules ou les paillettes comportent un extrait de céréale séché, soluble dans l'eau.

3. Procédé selon la revendication 2, caractérisé en ce que l'extrait de céréale est un extrait d'orge malté.

4. Procédé selon l'une quelconque des revendications précédentes, caractérisé en ce que l'étape de séchage comprend un séchage par air chaud.

5. Procédé selon la revendication 4, caractérisé en ce que l'étape de séchage par air chaud comprend en outre un séchage vibratoire par de l'air forcé.

6. Procédé selon la revendication 5, caractérisé en ce que le séchage vibratoire par de l'air forcé est effectué pendant environ une minute à une température de l'air chaud de 90° à 100°C.

7. Procédé selon l'une quelconque des revendications précédentes, caractérise en ce que les agrégats sont séchés jusqu'à un taux d'humidité de 2,5% à 4,5%.

## Patentansprüche

1. Ein Verfahren zur Herstellung eines in Wasser dispergierbaren Gemisches zur Verwendung als ein Sofortnahrungsmittel, Sofortgetränk oder dergleichen durch Zerstäuben eines dem Nahrungsmittel, Getränk oder dergleichen angemessenen flüssigen Aromakonzentrates, Geschmackskonzentrates oder gemischten Aroma/Geschmackskonzentrates, mit einer Viskosität von 5 Centipoise (5 mPa.s) bis 200.000 Centipoise (0,2 kPa.s) als Tröpfchen in eine Wirbelschicht, wobei die Feststoffe in dieser Wirbelschicht einen getrockneten Extrakt dieses Nahrungsmittels, Getränkes oder dergleichen umfassen, worauf diese Feststoffe Aggregate auf den Tröpfchen bilden, wobei diese Aggregate einen Feuchtigkeitsgehalt unter 15% aufweisen, dadurch gekennzeichnet, daß die Feststoffe ein Gemisch aus Teilchen und Flocken in einem Gewichtsverhältnis von Flocken:Teilchen im Bereich von 30:70 bis 70:30 umfassen, wobei die Flocken Durchmesser im Bereich von 0,5 mm bis 12,7 mm aufweisen, das Gewichtsverhältnis der Tröpfchen zu den Feststoffen mindestens 1:5 beträgt, und wobei das Verfahren zusätzlich ein Trocknen dieser Aggregate im wesentlichen unmittelbar nach ihrer Bildung auf einen Feuchtigkeitsgehalt von weniger als 10% umfaßt.

2. Ein Verfahren nach Anspruch 1, dadurch gekennzeichnet, daß die Teilschen oder Flocken einen getrockneten, wasserlöslichen Kornextrakt umfassen.

3. Ein Verfahren nach Anspruch 2, dadurch gekennzeichnet, daß der Kornextrakt ein Gerstenmalzextrakt ist.

4. Ein Verfahren nach irgendeinem vorhergehenden Anspruch, dadurch gekennzeichnet, daß die Trockenstufe ein Trocknen mit heißer Luft umfaßt.

5. Ein Verfahren nach Anspruch 4, dadurch gekennzeichnet, daß die Trockenstufe mit heißer Luft weiterhin ein vibrierendes Trocknen mit Druckluft umfaßt.

**0 011 324**

6. Ein Verfahren nach Anspruch 5, dadurch gekennzeichnet, daß das vibrierende Trocknen mit Druckluft etwa 1 Minute bei einer Heißlufttemperatur von 90° bis 100°C durchgeführt wird.

7. Ein Verfahren nach irgendeinem vorhergehenden Anspruch, dadurch gekennzeichnet, daß die Aggregate auf einen Feuchtigkeitsgehalt von 2,5% bis 4,5% getrocknet werden.